# EUROPÄISCHE PATENTSCHRIFT

(11) **EP 4 049 101 B1**
(45) Veröffentlichungstag und Bekanntmachung des Hinweises auf die Patenterteilung: **02.07.2025**
(21) Anmeldenummer: 20796548.4
(22) Anmeldetag: 21.10.2020
(51) Int. Cl.: G05B 19/418

(54) **MULTIFUNKTIONALE GATEWAYEINHEIT, PRODUKTIONSSYSTEM UND VERFAHREN ZUM BETREIBEN EINES PRODUKTIONSSYSTEMS**
MULTIFUNCTIONAL GATEWAY UNIT, PRODUCTION SYSTEM AND METHOD FOR OPERATING A PRODUCTION SYSTEM
UNITÉ PASSERELLE MULTIFONCTION, SYSTÈME DE PRODUCTION ET PROCÉDÉ POUR FAIRE FONCTIONNER UN SYSTÈME DE PRODUCTION

(30) Priorität: 24.10.2019 DE 102019128724
(43) Veröffentlichungstag der Anmeldung: 31.08.2022
(73) Patentinhaber: HOMAG GmbH, 72296 Schopfloch (DE)
(72) Erfinder: RIETHMÜLLER, Simon, 72202 Nagold-Vollmaringen (DE); MEINTEL, Martin, 72160 Horb-Talheim (DE); PAUL, Jochen, 83125 Eggstätt (DE); FRIEBOLIN, Manuel, 75365 Calw-Stammheim (DE); KERTH, Benjamin, 72072 Tübingen (DE)
(74) Vertreter: Hoffmann Eitle
(86) Internationale Anmeldenummer: PCT/EP2020/079592
(87) Internationale Veröffentlichungsnummer: WO 2021/078782

(56) Entgegenhaltungen:
- EP-A1- 2 621 245
- EP-A1- 2 757 803
- DE-A1- 102017 128 903
- DE-T5- 112015 004 984
- US-B1- 6 832 251

## Beschreibung

### Technisches Gebiet

Die Erfindung betrifft eine multifunktionale Gatewayeinheit zum Verbinden mindestens einer Vorrichtung, die zum Bearbeiten, Handhaben oder Lagern von Werkstücken dient, die zumindest abschnittsweise aus Holz, Holzwerkstoffen oder Kunststoff bestehen, mit einem Datenserver. Darüber hinaus betrifft die Erfindung ein Produktionssystem und ein Verfahren zum Betreiben eines Produktionssystems.

### Stand der Technik

Produktionssysteme zum Bearbeiten, Handhaben oder Lagern von Werkstücken unterliegen in den letzten Jahren einer immer weiter zunehmenden Vernetzung. So werden einerseits Maschinen und Anlagen intern miteinander datenmäßig vernetzt, andererseits werden auch immer mehr Maschinen und Anlagen über das Internet mit externen Geräten gekoppelt. Hierfür hat sich das Schlagwort "Industrie 4.0" etabliert.

Ein System, das über eine Datenfernübertragungsschnittstelle eine Kommunikation mit einer Holzbearbeitungsmaschine, ist beispielsweise in der DE 10 2017 207 993 A offenbart.

Ein weiteres Beispiel einer bisher bekannten Ausgestaltung einer multifunktionalen Gatewayeinheit in Form einer Client-Vorrichtung zur Datenerfassung und Vorverarbeitung von prozessbezogenen Massendaten von mindestens einer CNC-Maschine oder einem Industrieroboter kann DE 11 2015 004 984 T5 entnommen werden.

Um die jeweiligen Maschinen und Anlagen mit anderen Geräten vernetzen zu können, ist meist eine individuelle, maßgeschneiderte Lösung erforderlich, was zu einem hohen technischen Aufwand führt.

### Darstellung der Erfindung

Es ist Aufgabe der Erfindung, eine Vernetzung einer Vorrichtung, die zum Bearbeiten, Handhaben oder Lagern von Werkstücken, Montagematerial, Betriebsmitteln oder Werkzeugen dient, mit geringem Aufwand und zügig zu ermöglichen.

Diese Aufgabe wird erfindungsgemäß durch eine multifunktionale Gatewayeinheit nach Anspruch 1, ein Produktionssystem nach Anspruch 7 sowie ein Verfahren zum Betreiben eines Produktionssystems nach Anspruch 10 gelöst. Besonders bevorzugte Weiterbildungen der Erfindung sind in den abhängigen Ansprüchen angegeben.

Der Erfindung liegt der Gedanke zugrunde, eine ebenso modulare wie universell einsetzbare Einheit zu schaffen, welche eine flexible und schnelle Vernetzung von Vorrichtungen mit anderen Geräten bzw. mit einem Datenserver ermöglicht. Zu diesem Zweck umfasst die Erfindung eine multifunktionale Gatewayeinheit zum Verbinden mindestens einer Vorrichtung, die zum Bearbeiten, Handhaben oder Lagern von Werkstücken dient und mindestens eine Datenschnittstelle zum Verbinden der Gatewayeinheit mit dem Datenserver aufweist. Darüber hinaus umfasst die multifunktionale Gatewayeinheit eine Recheneinheit, die eine CPU aufweist und eingerichtet ist, mit der Datenschnittstelle Daten auszutauschen.

Ferner umfasst die multifunktionale Gatewayeinheit weitere Schnittstellen. Bei dieser handelt es sich um eine Sensorschnittstelle, die eingerichtet ist, Daten von einem Sensor, der einer Vorrichtung zugeordnet ist, zu empfangen und an die Recheneinheit weiterzugeben. Zusätzlich handelt es sich bei den weiteren Schnittstellen um eine Ausgabeschnittstelle, die eingerichtet ist, Daten von der Recheneinheit zu empfangen und an mindestens eine Einheit der Vorrichtung weiterzugeben.

Auf diese Weise bietet die Erfindung eine Vielzahl von Funktionen in einer integrierten Gatewayeinheit, die ohne großen (Konfigurations-)Aufwand und schnell eine Vernetzung von Vorrichtungen eines Produktionssystems ermöglicht. Die Gatewayeinheit ist modular, flexibel und vorzugsweise mobil, so dass sie an praktisch jedem Ort und in praktisch jedem Umfeld eingesetzt werden kann.

Die erfindungsgemäße Gatewayeinheit lässt sich dank ihrer Sensorschnittstelle mit vielfältigsten Sensoren der jeweiligen Vorrichtung verbinden und leistet so einen wesentlichen Beitrag zu einem effizienten und sicheren Betrieb. Der Begriff Sensoren ist in diesem Zusammenhang breit zu verstehen und bezieht sich auf jegliche Einrichtungen, die Informationen über die jeweilige Vorrichtung sammeln und bereitstellen. So kann es sich neben klassischen Sensoren wie etwa Beschleunigungssensoren beispielsweise auch um Bild- oder Tonerfassungssensoren wie etwa Kameras oder Mikrofone handeln.

Darüber hinaus kann die erfindungsgemäße Gatewayeinheit dank ihrer Ausgabeschnittstelle eine zentrale Rolle bei der Steuerung wichtiger Vorrichtungsfunktionen spielen, wobei auf Beispiele und Besonderheiten der mindestens einen an die Ausgabeschnittstelle angeschlossenen Einheit untenstehend noch näher eingegangen wird.

Im Hinblick auf die angestrebte zügige und problemlose Kopplung der Gatewayeinheit ist erfindungsgemäß außerdem vorgesehen, dass die Gatewayeinheit eine Plug-and-Play-Einheit aufweist, die eingerichtet ist, einen an einer Sensorschnittstelle angeschlossenen Sensor und/oder eine an die Ausgabeschnittstelle angeschlossene Einheit der Vorrichtung zu identifizieren und die Recheneinheit für die Kommunikation zu konfigurieren.

Hierdurch wird es möglich, die erfindungsgemäße Gatewayeinheit mit beliebigen Vorrichtungen und Geräten zu koppeln, ohne dass hierfür, abgesehen von den Kopplungsvorgang über die jeweilige Schnittstelle, bestimmte Bedienschritte oder Prozeduren durch eine Bedienperson erforderlich sind. Dem steht nicht entgegen, dass unter bestimmten Randbedingungen, beispielsweise aus Gründen der Betriebs- und Arbeitssicherheit, dennoch gewisse Prozeduren von einer Bedienperson vorgenommen oder bestätigt werden. In jedem Falle ergibt sich eine drastisch vereinfachte und extrem vielseitige Einsetzbarkeit der erfindungsgemäßen Gatewayeinheit, was insbesondere bei wechselnden Einsatzorten oder wechselnden Konfigurationen von Produktionssystemen von großem Vorteil ist.

Dabei ist die Plug-and-Play-Einheit eingerichtet, auf in der Gatewayeinheit gespeicherte Konfigurationsdaten zuzugreifen und/oder über die Datenschnittstelle auf externe Konfigurationsdaten zuzugreifen.

Durch die gespeicherten Konfigurationsdaten kann ein Kopplungsvorgang erreicht werden, der ggf. vollautomatisch und mit einem hohen Maß an Sicherheit innerhalb kurzer Zeit vollzogen werden kann. Eine noch größere Bandbreite koppelbarer Vorrichtungen und Geräte lässt sich durch den Zugriff der Plug-and-Play-Einheit auf externe Konfigurationsdaten über die Datenschnittstelle erreichen, wodurch die Koppelbarkeit der erfindungsgemäßen Gatewayeinheit praktisch unbegrenzt wird.

Die Recheneinheit kann im Rahmen der vorliegenden Erfindung auf unterschiedliche Art und Weise ausgestattet sein. Eine besonders einfache und flexible Struktur erhält man, wenn die Recheneinheit gemäß einer Weiterbildung der Erfindung einen Einplatinencomputer aufweist. Ein Einplatinencomputer wie etwa ein Raspberry-Pi kann sehr kompakt ausgeführt werden und ist dennoch in der Lage, sich sehr flexibel an die jeweiligen Anforderungen anzupassen und unterschiedlichste Arten von Software und Daten zu verarbeiten. Bei höheren Anforderungen an Flexibilität oder Rechenleistung kann im Rahmen der Erfindung jedoch auch ein Mehrplatinencomputer von Vorteil sein.

Die Schnittstellen der erfindungsgemäßen Gatewayeinheit können prinzipiell kabelgebunden arbeiten, beispielsweise auch als LAN-Schnittstelle. Gemäß einer Weiterbildung der Erfindung ist jedoch vorgesehen, dass mindestens eine Schnittstelle, insbesondere mindestens eine Datenschnittstelle, drahtlos arbeitet. Auf diese Weise wird die Flexibilität und Ortsunabhängigkeit der erfindungsgemäßen Gatewayeinheit noch weiter erhört. Dabei ist es besonders bevorzugt, dass eine der Schnittstellen als WLAN- oder Mobilfunkschnittstelle ausgestattet ist, sodass die vorstehend genannten Vorteile mit hoher Datensicherheit und Übertragungsrate erreicht werden können.

Darüber hinaus ist gemäß einer Weiterbildung der Erfindung vorgesehen, dass die Gatewayeinheit eine Identifikationseinrichtung wie insbesondere eine NFC-Schnittstelle oder optische Identifikationsmittel aufweist. Hierdurch kann die Kopplung der Gatewayeinheit mit einer Vorrichtung oder sonstigen Geräten, auf die untenstehend noch näher eingegangen werden wird, deutlich erleichtert werden. So kann die Identifikationseinrichtung im Zuge eines Kopplungsvorganges beispielsweise nicht nur die Identität und Eigenschaften der Gatewayeinheit übermitteln, sondern beispielsweise auch den Standort oder sonstige Umgebungsparameter. Auf diese Weise kann ein automatisierter Kopplungsvorgang unterstützt werden, der eine sehr geringe Benutzerinteraktion erfordert.

Darüber hinaus ist gemäß einer Weiterbildung der Erfindung vorgesehen, dass die Gatewayeinheit eine Anzeigeeinrichtung aufweist, die bevorzugt ausgewählt ist aus Leuchtelemente, Bildschirm, Projektor, Lautsprecher und Vibrationseinrichtung. Hierdurch kann die Gatewayeinheit mit geringem Aufwand wichtige Zusatzfunktionalitäten bereitstellen, wie beispielsweise den Status sowohl der Gatewayeinheit als auch gekoppelter Vorrichtungen und Geräte anzuzeigen. Ferner können auch wichtige Warnmeldungen ausgegeben werden, was die Betriebssicherheit deutlich erhöht. Auch können hilfreiche Handlungsanweisungen, Kontextmenüs oder vielfältige andere Hilfestellungen für den Benutzer mit geringem Aufwand bereitgestellt werden.

Gemäß einer Weiterbildung der Erfindung weist die Gatewayeinheit ein Gehäuse auf, in oder an welchem die Komponenten der Gatewayeinheit angeordnet sind, wobei das Gehäuse ein einzeln bewegbares und abstellbares Modul bildet. Hierdurch wird die Mobilität und Vielseitigkeit der erfindungsgemäßen Gatewayeinheit weiter erhöht. So kann die Gatewayeinheit problemlos an jedem beliebigen Ort aufgestellt werden, ohne dass eine komplizierte und aufwändige Integration von Komponenten in bestehende Vorrichtungen oder Anlagen erforderlich ist. Gleichzeitig können Komponenten der Gatewayeinheit durch das Gehäuse vor Umwelteinflüssen und Beschädigungen geschützt werden, was in einem Produktionsumfeld besonders wichtig sein kann.

Die vorstehend genannten Vorteile sind besonders ausgeprägt, wenn die erfindungsgemäße multifunktionale Gatewayeinheit in einem Produktionssystem gemäß Anspruch 7 zum Einsatz kommt, welches ferner eine Vorrichtung aufweist, die zum Bearbeiten, Handhaben oder Lagern von Werkstücken, Montagematerial, Betriebsmitteln oder Werkzeugen dient. Die Werkstücke bestehen im Rahmen der vorliegenden Erfindung zumindest abschnittsweise aus Holz, Holzwerkstoffen, Kunststoff oder dergleichen, obgleich die vorliegende Erfindung nicht hierauf beschränkt ist. Bei derartigen Produktionssystemen können vielfältige Produktionsanforderungen und wechselnde Konfigurationen auftreten, sodass die erfindungsgemäße multifunktionale Gatewayeinheit eine zentrale Rolle zur Steigerung der Effizienz, Zuverlässigkeit und Betriebssicherheit des gesamten Produktionssystems leisten kann.

Noch ausgeprägter sind diese Vorteile, wenn das Produktionssystem gemäß einer Weiterbildung der Erfindung ein mobiles Endgerät umfasst, das eingerichtet ist, mit der multifunktionalen Gatewayeinheit insbesondere über den Datenserver zu kommunizieren. Auf diese Weise lassen sich sowohl Einrichtung als auch Betrieb des Produktionssystems noch effizienter, sicherer und benutzerfreundlicher gestalten, wobei jeder Komponente des Produktionssystems dezidierte Aufgaben zugewiesen werden können, die durch diese Komponente am besten erledigt werden können. So kann das mobile Endgerät insbesondere für die direkte Interaktion mit einer Bedienperson ausgelegt sein und dabei auf bewährte Benutzerschnittstellen zurückgreifen. Das mobile Endgerät kann dabei personalisiert, das heißt einer Bedienperson zugewiesen sein, während die übrigen Komponenten beispielsweise dauerhaft oder zumindest vorübergehend einer bestimmten Vorrichtung oder einem bestimmten Gerät zugewiesen sind. Auf diese Weise erhält man ein dynamisches Produktionssystem, bei dem sich eine Bedienperson mit einem mobilen Endgerät dauerhaft oder vorübergehend mit bestimmten Gatewayeinheiten koppeln kann, sei es direkt oder über einen Datenserver, gegebenenfalls unter Nutzung des Internets.

Dabei ist es besonders bevorzugt, dass das mobile Endgerät eine Identifikationseinrichtung wie insbesondere eine NFC-Schnittstelle oder eine optische Identifikationseinrichtung aufweist. Hierdurch kann der Kopplungsvorgang zwischen dem mobilen Endgerät und beispielsweise einer Gatewayeinheit oder anderen Geräten unterstützt werden, wobei insbesondere auch kontextbezogene Informationen wie beispielsweise die örtliche Lage der zu koppelnden Einheit oder sonstige Parameter übertragen werden können, gegebenenfalls auch bidirektional.

Gemäß einer Weiterbildung der Erfindung ist ferner vorgesehen, dass die Vorrichtung eine mit der multifunktionalen Gatewayeinheit gekoppelte Einheit aufweist. Hierdurch wird es möglich, über die multifunktionale Gatewayeinheit Einfluss auf den Betrieb einzelner oder mehrerer Vorrichtungen des Produktionssystems zu nehmen, wodurch eine unüberschaubare Vielfalt von Vorteilen erreicht werden kann, wie insbesondere eine gesteigerte Effizienz, eine erhöhte Betriebssicherheit und eine erhöhte Flexibilität. Dabei können unterschiedlichste Einheiten der Vorrichtung gekoppelt und angesprochen werden, wobei die Einheit bevorzugt ausgewählt ist aus Leuchtanzeigen wie insbesondere LED-Lichtbänder, Bildschirm, Projektor, Lautsprecher, Vibrationseinrichtung, Drucker, Maschinensteuerung, Controllerbox und Aktor. Diese Aufzählung zeigt, dass das erfindungsgemäße Produktionssystem eine extrem große Bandbreite zur Steigerung der Effizienz, Betriebssicherheit und Variabilität eines Systems besitzt.

Ein erfindungsgemäßes Verfahren zum Betreiben des erfindungsgemäßen Produktionssystem ist Gegenstand des Patentanspruchs 10. Dieses zeichnet sich dadurch aus, dass die multifunktionale Gatewayeinheit mit der Vorrichtung über die Sensorschnittstelle und/oder die Ausgabeschnittstelle gekoppelt wird, und andererseits die multifunktionale Gatewayeinheit mit dem Datenserver über die Datenschnittstelle, insbesondere über das Internet gekoppelt wird. Hierin zeigt sich der flexible und modulare Charakter des erfindungsgemäßen Verfahrens, mittels dessen die multifunktionale Gatewayeinheit mit unterschiedlichsten Vorrichtungen zusammenarbeiten und dabei auf eine praktisch unbegrenzte Vielfalt von Informationen und Instruktionen aus dem Datenserver zurückgreifen kann.

Um einen möglichst zügigen und zuverlässigen Kopplungsvorgang zu gewährleisten, ist gemäß einer Weiterbildung des erfindungsgemäßen Verfahrens vorgesehen, dass vor dem Koppeln der multifunktionalen Gatewayeinheit mit der Vorrichtung folgende Schritte durchgeführt werden: die multifunktionale Gatewayeinheit identifiziert einen zu koppelnden Sensor und/oder eine zu koppelnde Einheit der Vorrichtung, die multifunktionale Gatewayeinheit überprüft, ob in der multifunktionalen Gatewayeinheit ein Objekt vorhanden ist, das für die Kommunikation mit dem zu koppelnden Sensor und/oder der zu koppelnden Einheit der Vorrichtung eingerichtet ist, falls ein Objekt vorhanden ist, wird unter Einsatz des Objekts eine Kopplung zwischen dem zu koppelnden Sensor bzw. der zu koppelnden Einheit der Vorrichtung und der multifunktionalen Gatewayeinheit hergestellt, und/oder falls kein Objekt vorhanden ist, wird über die Datenschnittstelle ein geeignetes Objekt erhalten und anschließend unter Einsatz des erhaltenen Objekts eine Kopplung zwischen dem zu koppelnden Sensor bzw. der zu koppelnden Einheit der Vorrichtung und der multifunktionalen Gatewayeinheit hergestellt.

Gemäß einer Weiterbildung der Erfindung wird mindestens ein mobiles Endgerät mit der multifunktionalen Gatewayeinheit gekoppelt, und zwar bevorzugt über den Datenserver. Hierdurch lassen sich die oben im Zusammenhang mit einem mobilen Endgerät genannten Vorteile besonders wirksam erreichen.

Darüber hinaus ist gemäß einer Weiterbildung des erfindungsgemäßen Verfahrens vorgesehen, dass vor dem Koppeln des mindestens einen mobilen Endgeräts mit der multifunktionalen Gatewayeinheit ein Identifizierungsvorgang durchgeführt wird, bei welchem das mobile Endgerät mindestens einen Parameter der multifunktionalen Gatewayeinheit und/oder eines Sensors und/oder einer Einheit der Vorrichtung identifiziert. Auf diese Weise können verschiedene Kontextinformationen an das mobile Endgerät übertragen werden, wie beispielsweise der Typ oder Ort der jeweiligen Vorrichtung bzw. des jeweiligen Geräts, verschiedene Betriebszustände und vielfältige andere Parameter. Hierdurch ergibt sich ein zügiger und störungsfreier Kopplungsvorgang, und es kann nach dem Koppeln unmittelbar zum Betrieb des Produktionssystems übergegangen werden.

Darüber hinaus ist gemäß einer Weiterbildung der Erfindung vorgesehen, dass vorrichtungsbezogene Daten von der multifunktionalen Gatewayeinheit an den Datenserver und/oder das mobile Endgerät gegeben werden. Hierdurch können die zur Steuerung des Produktionssystems verwendeten Einheiten und Geräte stets über den Zustand und Anforderungen der Vorrichtungen des Produktionssystems unterrichtet sein, was einen zügigen, störungsfreien und effizienten Betrieb des Produktionssystems ermöglicht.

Alternativ oder zusätzlich können gemäß einer Weiterbildung der Erfindung vorrichtungsbezogene Daten oder Weisungen von dem Datenserver und/oder dem mobilen Endgerät an die multifunktionale Gatewayeinheit gegeben werden. Auf diese Weise kann von den verschiedenen Geräten oder Einrichtungen des Produktionssystems unmittelbar Einfluss auf den Betrieb der verschiedenen Vorrichtungen genommen werden, mit entsprechenden Vorteilen für die Flexibilität, Produktivität und auch Störungsfreiheit des Gesamtsystems.

Gemäß einer Weiterbildung der Erfindung ist ferner vorgesehen, dass das mobile Endgerät bevorzugt über den Datenserver mit der multifunktionalen Gatewayeinheit gekoppelt wird und anschließend unter Einsatz des mobilen Endgeräts mindestens ein Sensor und/oder mindestens eine Einheit der Vorrichtung mit der multifunktionalen Gatewayeinheit gekoppelt wird. Auf diese Weise kann das mobile Endgerät dazu genutzt werden, den Kopplungsvorgang zwischen der multifunktionalen Gatewayeinheit und der jeweiligen Vorrichtung zu unterstützen oder zu steuern. Hierdurch wird nicht nur die Zuverlässigkeit des Kopplungsvorgangs zwischen Gatewayeinheit und Vorrichtung erhöht, sondern es wird auch die Bandbreite der mit der Gatewayeinheit koppelbaren Vorrichtungen deutlich gesteigert. So kann mittels des mobilen Endgeräts beispielsweise der Kopplungsvorgang unterstützt oder zumindest rückbestätigt werden, so dass die mobile Gatewayeinheit auch mit völlig unbekannten oder neuartigen oder jedenfalls bisher nicht mit der Gatewayeinheit gekoppelten Vorrichtungen gekoppelt werden kann. Dies unterstreicht den flexiblen und in völlig neuartiger Weise anpassbaren Charakter des erfindungsgemäßen Produktionssystems und des erfindungsgemäßen Verfahrens.

Darüber hinaus ist gemäß einer Weiterbildung der Erfindung vorgesehen, dass die multifunktionale Gatewayeinheit den Status mindestens eines Sensors und/oder mindestens einer Einheit der Vorrichtung anzeigt. Diese Zusatzfunktion kann mit minimalem Aufwand erreicht werden und steigert dennoch die Zuverlässigkeit und Betriebssicherheit des erfindungsgemäßen Produktionssystems in erheblicher Weise.

### Kurze Beschreibung der Zeichnung

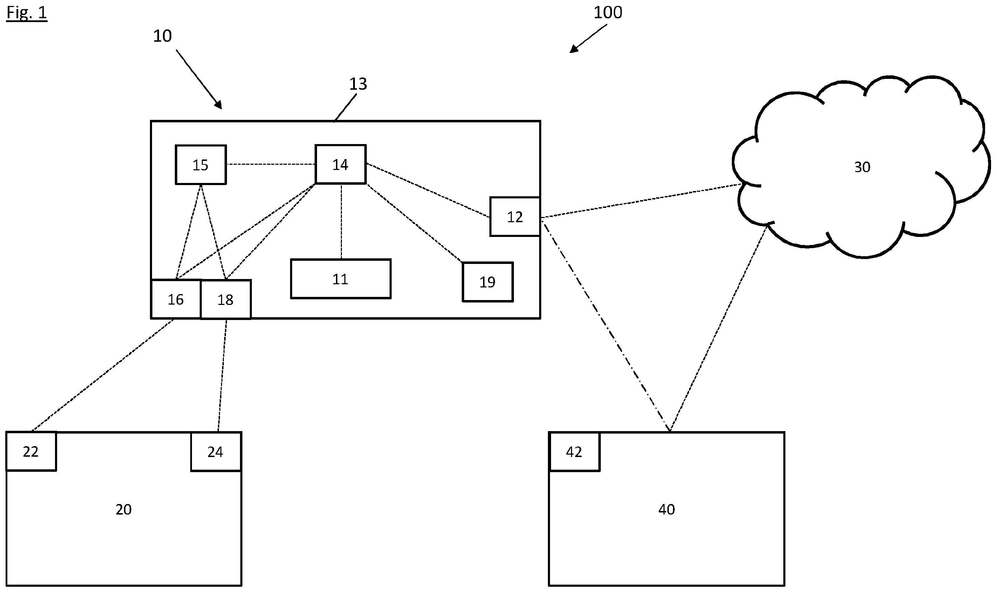

Fig. 1 zeigt schematisch eine Ausführungsform eines erfindungsgemäßen Produktionssystems mit einer erfindungsgemäßen multifunktionalen Gatewayeinheit.

### Ausführliche Beschreibung bevorzugter Ausführungsformen

Bevorzugte Ausführungsformen der Erfindung werden nachfolgend ausführlich unter Bezugnahme auf die begleitende Zeichnung beschrieben.

Ein Produktionssystem 100 gemäß einer bevorzugten Ausführungsform der Erfindung ist in Fig. 1 schematisch dargestellt. Das Produktionssystem dient zum Bearbeiten, Handhaben (etwa Umsetzen oder Transportieren), oder Lagern von unterschiedlichsten Gegenständen und umfasst zu diesem Zweck mindestens eine Vorrichtung 20. Bei den Gegenständen kann es sich beispielsweise um Werkstücke, aber beispielsweise auch um Werkzeuge, Verbrauchsmaterial, Betriebsmittel oder dergleichen handeln. In der vorliegenden Ausführungsform ist die Vorrichtung 20 zum Bearbeiten, Handhaben und Lagern von Werkstücken ausgelegt, die zumindest abschnittsweise aus Holz, Holzwerkstoffen, Kunststoff oder dergleichen bestehen, wie sie im Bereich der Möbel- und Bauelementeindustrie verbreitet zum Einsatz kommen. Konkret kann es sich bei der Vorrichtung 20 somit beispielsweise um eine Bearbeitungsmaschine, etwa zum spanenden Bearbeiten oder zum Beschichten von Werkstücken handeln, oder aber beispielsweise um eine Fördereinrichtung, ein Regal- bzw. Speichersystem.

Um unterschiedliche Parameter der Vorrichtung 20 erfassen zu können, umfasst die Vorrichtung 20 mindestens einen, vorzugsweise aber mehrere Sensoren 22, wie etwa Beschleunigungssensoren, Bildsensoren (etwa Kameras), Tonsensoren (etwa Mikrofone), Bewegungsmelder etc.

Darüber hinaus umfasst die Vorrichtung 20 mindestens eine gekoppelte Einheit 24, die dazu dient, verschiedene Funktionen an der Vorrichtung auszuführen oder zu unterstützen. So kann es sich bei der gekoppelten Einheit 24 beispielsweise um eine Leuchtanzeige wie etwa LED-Lichtbänder handeln, die eine Bedienperson beispielsweise dabei unterstützen können, ein Werkstück im Bearbeitungsbereich zu positionieren oder in einem bestimmten Ablagefach abzulegen oder aus diesem zu entnehmen. Bei der gekoppelten Einheit 24 kann es sich aber auch um vielfältige andere Geräte handeln, wie etwa eine Ausgabeeinrichtung in Form eines Bildschirms, Projektors, Lautsprechers, einer Vibrationseinrichtung oder eines Druckers, um Informationen oder Anweisungen an die Maschine und/oder eine Bedienperson auszugeben. Auch kann eine Controllerbox oder ein Teil einer Maschinensteuerung als gekoppelte Einheit 24 fungieren. Gegebenenfalls können auch direkt Aktoren oder andere aktive Komponenten der Vorrichtung 20 als gekoppelte Einheit 24 angesprochen werden. Auf die Kommunikation mit den gekoppelten Einheiten 24 wird untenstehend noch näher eingegangen.

Ferner umfasst das Produktionssystem 100 die funktionale Gatewayeinheit 10, die in der vorliegenden Ausführungsform ein im Wesentlichen quaderförmiges Gehäuse 13 aufweist und somit als Gateway-Cube ausgestaltet ist. Im Gehäuse 13 sind die in Fig. 1 veranschaulichten Komponenten der multifunktionalen Gateway-Einheit 10 angeordnet, wobei der "Cube" in Größe und Gewicht derart ausgelegt ist, dass er von einer Bedienperson problemlos bewegt und an jedem beliebigen Ort abgestellt werden kann. Ferner weist das Gehäuse 13, obgleich in Fig. 1 nicht gezeigt, Montage wie etwa Ösenanordnungen, Magnethalterungen oder dergleichen auf, um das Gehäuse 13 bei Bedarf zumindest vorübergehend an der Vorrichtung 20 oder an einer anderen geeigneten Stelle anzubringen.

Wie in Fig. 1 gezeigt ist, umfasst die multifunktionale Gatewayeinheit 10 eine Datenschnittstelle 12, die dazu dient, die Gatewayeinheit 10 mit einem Datenserver 30 zu verbinden. Der Datenserver 30 kann prinzipiell lokal (beispielsweise in der Produktionshalle) angeordnet sein. Häufig wird der Datenserver 30 jedoch in der "Cloud" vorgesehen sein, d.h. die Datenschnittstelle 12 ist eingerichtet, über eine Internetverbindung oder eine ähnliche Verbindung auf den Datenserver 30 zuzugreifen. Dabei ist es bevorzugt, dass die Datenschnittstelle 12 drahtlos arbeitet und beispielsweise als W-Lan oder Mobilfunkschnittstelle ausgestaltet ist. Alternativ oder zusätzlich kann die Gatewayeinheit 10 jedoch auch eine LAN-Schnittstelle zur Verbindung mit dem Datenserver 30 aufweisen.

Darüber hinaus umfasst die multifunktionale Gatewayeinheit eine Recheneinheit 14, die in der vorliegenden Ausführungsform als Einplatinencomputer ausgestaltet ist, beispielsweise vom Typ Raspberry Pi. Die Recheneinheit 14 dient dazu, mit der Datenschnittstelle 12 und weiteren Einheiten und Schnittstellen der multifunktionalen Gatewayeinheit 10 Daten auszutauschen und diese Daten zu verarbeiten.

Darüber hinaus weist die multifunktionale Gatewayeinheit 10 in der vorliegenden Ausführungsform zwei weitere Schnittstellen auf, nämlich eine Sensorschnittstelle 16 und eine Ausgabeschnittstelle 18. Die Sensorschnittstelle 16 dient dazu, von einem der vorstehend beschriebenen Sensoren 22 der Vorrichtung 20 zu empfangen und diese an die Recheneinheit 14 weiterzugeben. Demgegenüber dient die Ausgabeschnittstelle 18 dazu, Daten von der Recheneinheit 14 zu empfangen und diese wiederum an mindestens eine der vorstehend beschriebenen, gekoppelten Einheiten 24 der Vorrichtung 20 weiterzugeben.

Im Hinblick auf die an diese Schnittstellen 16 und 18 anzuschließenden Sensoren 22 bzw. Einheiten 24 weist die multifunktionale Gatewayeinheit 10 eine Plug-and-Play-Einheit 15 auf. Diese dient dazu, einen an einer Sensorschnittstelle 16 angeschlossenen Sensor 22 bzw. eine an die Ausgabeschnittstelle 18 angeschlossene Einheit 24 der Vorrichtung 20 zu identifizieren und die Recheneinheit für die Kommunikation zu konfigurieren. Es ist somit prinzipiell kein Benutzereingriff erforderlich, um einen angeschlossenen Sensor 22 oder eine angeschlossene Einheit 24 in Betrieb zu nehmen, obgleich je nach Anwendungsfall Benutzereingriffe sinnvoll sein können.

Im Zuge eines Konfigurationsvorganges greift die Plug-and-Play-Einheit 15 entweder auf in der Gatewayeinheit 10 gespeicherte Konfigurationsdaten zu oder lädt diese über die Datenschnittstelle 12 von einer externen Quelle, wie etwa dem Datenserver 30 oder einem anderen geeigneten Datenserver herunter.

Darüber hinaus umfasst die multifunktionale Gatewayeinheit 10 in der vorliegenden Ausführungsform eine NFC-Schnittstelle 19, die zur schnellen Identifikation und zum schnellen Datenaustausch mit externen Geräten dient. Alternativ können auch andere Identifikationsmittel wie etwa optische Identifikationsmittel zum Einsatz kommen.

Darüber hinaus umfasst die multifunktionale Gatewayeinheit 10 in der vorliegenden Ausführungsform eine Anzeigeeinrichtung in Form von LED-Leuchtelementen 11. Diese dienen in der vorliegenden Ausführungsform dazu, den Status an geschlossener Sensoren 22 oder Einheiten 24 oder auch der Gatewayeinheit 10 selbst anzuzeigen und gegebenenfalls Warnmeldungen oder sonstige Hinweise auszugeben. Es können jedoch auch komplexere Anzeigeeinrichtungen wie etwa ein Bildschirm, ein Projektor, ein Lautsprecher oder eine Vibrationseinrichtung sowie Kombinationen hiervon vorgesehen sein.

Darüber hinaus umfasst das Produktionssystem 100 in der vorliegenden Ausführungsform ein mobiles Endgerät 40, das beispielsweise nach Art eines Smartphones, Tabletcomputers oder sonstigen tragbaren Computern ausgestaltet sein kann. Das mobile Endgerät 40 ist eingerichtet, mit der multifunktionalen Gatewayeinheit 10 zu kommunizieren, wobei diese Kommunikation beispielsweise direkt über die Datenschnittstelle 12 der Gatewayeinheit 10 oder indirekt über den Datenserver 30 erfolgen kann. Dabei ist zu beachten, dass bedarfsweise auch zwischen beiden Kommunikationsarten gewechselt werden kann, sodass beispielsweise nur dann über den Datenserver 30 kommuniziert wird, wenn für die laufende Aktion Daten aus dem Datenserver 30 benötigt werden, während in anderen Fällen eine direkte Kommunikation zwischen dem mobilen Endgerät 40 und der Gatewayeinheit 10 stattfindet, beispielsweise über eine WLAN- oder Bluetooth-Verbindung.

Das Endgerät 40 umfasst in der vorliegenden Ausführungsform eine NFC-Schnittstelle, sodass bereits vor einer Kopplung des mobilen Endgeräts 40 mit der Gatewayeinheit 10 eine Identifikation sowie ein Austausch grundlegender Daten als Basis für den Kopplungsvorgang stattfinden kann. So kann das mobile Endgerät insbesondere auch Informationen über den aktuellen Standort und die Komponenten des Produktionssystems 100 erhalten.

Der Betrieb des erfindungsgemäßen Produktionssystems 100 vollzieht sich beispielsweise wie folgt: eine mit einem mobilen Endgerät 40 ausgestattete Bedienperson nähert sich der multifunktionalen Gatewayeinheit 10 und führt über die NFC-Schnittstellen 42 und 19 eine erste Identifikation der Gatewayeinheit 10 durch. Dabei erhält das mobile Endgerät 40 einerseits Informationen über den Ort und den Betriebszustand der Gatewayeinheit 10, gegebenenfalls aber auch Informationen über mit der Gatewayeinheit 10 verbundene Einheiten wie etwa Sensoren 22, gekoppelte Einheiten 24, Datenserver 30, sofern diese bereits mit der Gatewayeinheit 10 gekoppelt sind.

Anschließend findet, gegebenenfalls nach Rückbestätigung durch eine Bedienperson, eine Kopplung zwischen dem mobilen Endgerät 40 und der Gatewayeinheit 10 an der Datenschnittstelle 12 - gegebenenfalls unter Zwischenschaltung des Datenservers 30 - statt. Nunmehr ist das mobile Endgerät 40 derart mit der Gatewayeinheit 10 verbunden, dass unter Einsatz des mobilen Endgeräts 40 der Betrieb der Recheneinheit 14 gesteuert auch auf die angeschlossenen Einheiten 22 und 24 Einfluss genommen werden kann. Auf diese Weise können unter Einsatz des mobilen Endgeräts verschiedene Vorgänge des Produktionssystems gesteuert werden. So kann in einer ersten Phase auch die Konfiguration des Produktionssystems unterstützt werden, beispielsweise wenn an die Sensorschnittstelle 16 ein neuer Sensor 22 angeschlossen wird. In diesem Fall sofern prinzipiell eine automatische Kopplung des Sensors 22 durch die Plug-and-Play-Einheit stattfinden kann, kann die Bedienperson über das mobile Endgerät 40 aufgefordert werden, die Kopplung des Sensors 22 freizugeben, den Sensortyp zu bestätigen, bestimmte Sensorkonfigurationen vorzunehmen, etc. Entsprechende Vorgänge kann das mobile Endgerät 40 selbstverständlich auch im Hinblick auf die Kopplung von Einheiten 24 an die Ausgabeschnittstelle 18 oder die Kopplung des Datenservers 30 an die Datenschnittstelle 12 vornehmen bzw. unterstützen.

Neben diesen Konfigurationsvorgängen kann das mobile Endgerät 40 jedoch auch zur Überwachung und gegebenenfalls auch gezielten Steuerung des gesamten Produktionssystems 100 und insbesondere der Vorrichtung 20 eingesetzt werden. So können an dem mobilen Endgerät 40 einerseits vorrichtungsbezogene Daten wie etwa der Zustand der Vorrichtung 20 oder die Art und Anzahl der gerade bearbeiteten, gehandhabten oder gelagerten Werkstücke angezeigt werden. Andererseits kann die Bedienperson oder gegebenenfalls auch ein Softwaremodul auch Anweisungen an die Vorrichtung 20 geben, beispielsweise welche Werkstücke auf welche Weise zu bearbeiten, zu handhaben oder zu lagern sind. Auf diese Weise erfüllt das mobile Endgerät seine zentrale Rolle bei der Steuerung und Überwachung des Produktionssystems 100.

Von besonderer Bedeutung ist hierbei, dass das mobile Endgerät, das üblicherweise vorrübergehend einer bestimmten Bedienperson zugordnet ist, schnell und problemlos mit beliebigen multifunktionalen Gatewayeinheiten 10 gekoppelt werden kann. so kann sich eine mit einer mobilen Einheit 40 ausgestattete Bedienperson durch ein größeres Produktionssystem 100 mit mehreren multifunktionalen Gatewayeinheiten 10 bewegen und sich bedarfsweise und schnell mit der jeweiligen Gatewayeinheit koppeln, etwa um den Status der angeschlossenen Einrichtungen zu prüfen oder Anweisungen zu geben. Im weiteren Verlauf kann sich die Bedienperson auch schnell wieder von dieser Gatewayeinheit 10 entkoppeln und anschließend problemlos und schnell mit einer weiteren Gatewayeinheit koppeln.

Dieselben Überlegungen gelten entsprechend für die Gatewayeinheiten 10, die ebenfalls schnell und problemlos an verschiedenen Stellen eines Produktionssystems eingesetzt und gegebenenfalls durch Unterstützung durch ein mobiles Endgerät 40 eingerichtet, gekoppelt und betrieben werden können.

## Patentansprüche

1. Multifunktionale Gatewayeinheit (10) zum Verbinden mindestens einer Vorrichtung (20), die zum Bearbeiten, Handhaben oder Lagern von Werkstücken dient, die zumindest abschnittsweise aus Holz, Holzwerkstoffen oder Kunststoff bestehen, mit einem Datenserver (30), umfassend:
mindestens eine Datenschnittstelle (12) zum Verbinden der Gatewayeinheit (10) mit dem Datenserver (30),
mindestens eine Recheneinheit (14), die eine CPU aufweist und eingerichtet ist, mit der Datenschnittstelle (12) Daten auszutauschen,
mindestens eine Sensorschnittstelle (16), die eingerichtet ist, Daten von einem Sensor (22), der einer Vorrichtung (20) zugeordnet ist, zu empfangen und an die Recheneinheit (14) weiterzugeben, und
mindestens eine Ausgabeschnittstelle (18), die eingerichtet ist, Daten von der Recheneinheit (14) zu empfangen und an mindestens eine Einheit (24) der Vorrichtung (20) weiterzugeben,
**gekennzeichnet durch**
eine Plug-and-Play-Einheit (15), die eingerichtet ist, einen an einer Sensorschnittstelle (16) angeschlossenen Sensor (22) und/oder eine an die Ausgabeschnittstelle (18) angeschlossene Einheit (24) der Vorrichtung (20) zu identifizieren und die Recheneinheit für die Kommunikation zu konfigurieren, und
wobei die Plug-and-Play-Einheit (15) eingerichtet ist, auf in der Gatewayeinheit (10) gespeicherte Konfigurationsdaten zuzugreifen und/oder über die Datenschnittstelle (12) auf externe Konfigurationsdaten zuzugreifen.

2. Multifunktionale Gatewayeinheit nach Anspruch 1, **dadurch gekennzeichnet, dass** die Recheneinheit (14) einen Einplatinencomputer oder Mehrplatinencomputer aufweist.

3. Multifunktionale Gatewayeinheit nach Anspruch 1 oder 2, **dadurch gekennzeichnet, dass** mindestens eine Schnittstelle (12, 16, 18,), insbesondere mindestens eine Datenschnittstelle (12), drahtlos arbeitet und insbesondere als WLAN- oder Mobilfunkschnittstelle ausgestaltet ist.

4. Multifunktionale Gatewayeinheit nach einem der vorhergehenden Ansprüche, **dadurch gekennzeichnet, dass** sie ferner eine Identifikationseinrichtung (19) wie insbesondere eine NFC-Schnittstelle oder optische Identifikationsmittel aufweist.

5. Multifunktionale Gatewayeinheit nach einem der vorhergehenden Ansprüche, **dadurch gekennzeichnet, dass** sie ferner eine Anzeigeeinrichtung (11) aufweist, die bevorzugt ausgewählt ist aus Leuchtelemente, Bildschirm, Projektor, Lautsprecher und Vibrationseinrichtung.

6. Multifunktionale Gatewayeinheit nach einem der vorhergehenden Ansprüche, **dadurch gekennzeichnet, dass** sie ferner ein Gehäuse (13) aufweist, in oder an welchem die Komponenten der Gatewayeinheit (10) angeordnet sind, wobei das Gehäuse (13) bevorzugt ein einzeln bewegbares und abstellbares Modul bildet.

7. Produktionssystem (100), umfassend:
eine Vorrichtung (20), die zum Bearbeiten, Handhaben oder Lagern von Werkstücken dient, die zumindest abschnittsweise aus Holz, Holzwerkstoffen oder Kunststoff bestehen, oder zum Handhaben oder Lagern von Montagematerial, Betriebsmitteln oder Werkzeugen dient, und
eine multifunktionale Gatewayeinheit (10) nach einem der vorhergehenden Ansprüche zum Verbinden der Vorrichtung mit einem Datenserver.

8. Produktionssystem nach Anspruch 7, ferner umfassend:
ein mobiles Endgerät (40), das eingerichtet ist, mit der multifunktionale Gatewayeinheit (10) insbesondere über den Datenserver (30) zu kommunizieren und bevorzugt eine Identifikationseinrichtung (42) wie insbesondere eine NFC-Schnittstelle oder eine optische Identifikationseinrichtung aufweist.

9. Produktionssystem nach einem der Ansprüche 7 und 8, **dadurch gekennzeichnet, dass** die Vorrichtung (20) eine mit der multifunktionalen Gatewayeinheit (10) gekoppelte Einheit (24) aufweist, die bevorzugt ausgewählt ist aus Leuchtanzeigen wie insbesondere LED-Lichtbänder, Bildschirm, Projektor, Lautsprecher, Vibrationseinrichtung, Drucker, Maschinensteuerung, Controllerbox und Aktor.

10. Verfahren zum Betreiben eines Produktionssystems (100) nach einem der Ansprüche 7 bis 9, mit den Schritten:
Koppeln der multifunktionalen Gatewayeinheit (10) mit der Vorrichtung (20) über die Sensorschnittstelle (16) und die Ausgabeschnittstelle (18),
Koppeln der multifunktionalen Gatewayeinheit (10) mit dem Datenserver (30) über die Datenschnittstelle (12), insbesondere über das Internet.

11. Verfahren nach Anspruch 10, **dadurch gekennzeichnet, dass** vor dem Koppeln der multifunktionalen Gatewayeinheit (10) mit der Vorrichtung (20) folgende Schritte durchgeführt werden:
die multifunktionale Gatewayeinheit (10) identifiziert einen zu koppelnden Sensor (22) und/oder eine zu koppelnde Einheit (24) der Vorrichtung,
die multifunktionale Gatewayeinheit überprüft, ob in der multifunktionalen Gatewayeinheit ein Objekt vorhanden ist, das für die Kommunikation mit dem zu koppelnden Sensor (22) und/oder der zu koppelnden Einheit (24) der Vorrichtung (20) eingerichtet ist,
falls ein Objekt vorhanden ist, wird unter Einsatz des Objekts eine Kopplung zwischen dem zu koppelnden Sensor (22) bzw. der zu koppelnden Einheit (24) der Vorrichtung (20) und der multifunktionalen Gatewayeinheit (10) hergestellt, und/oder
falls kein Objekt vorhanden ist, wird über die Datenschnittstelle (12) ein geeignetes Objekt erhalten und anschließend unter Einsatz des erhaltenen Objekts eine Kopplung zwischen dem zu koppelnden Sensor (22) bzw. der zu koppelnden Einheit (24) der Vorrichtung (20) und der multifunktionalen Gatewayeinheit (10) hergestellt.

12. Verfahren nach Anspruch 10 oder 11, **dadurch gekennzeichnet, dass** mindestens ein mobiles Endgerät (40) mit der multifunktionalen Gatewayeinheit (10) gekoppelt wird, und zwar bevorzugt über den Datenserver (30) .

13. Verfahren nach Anspruch 12, **dadurch gekennzeichnet, dass** vor dem Koppeln des mindestens einen mobilen Endgeräts (40) mit der multifunktionalen Gatewayeinheit (10) ein Identifizierungsvorgang durchgeführt wird, bei welchem das mobile Endgerät (40) mindestens einen Parameter der multifunktionalen Gatewayeinheit (10) und/oder eines Sensors (22) und/oder einer Einheit (24) der Vorrichtung (20) identifiziert.

14. Verfahren nach einem der Ansprüche 10 bis 13, **dadurch gekennzeichnet, dass** vorrichtungsbezogene Daten von der multifunktionalen Gatewayeinheit (10) an den Datenserver (30) und/oder das mobile Endgerät (40) gegeben werden, und/oder dass vorrichtungsbezogene Daten oder Weisungen von dem Datenserver (30) und/oder dem mobilen Endgerät (40) an die multifunktionale Gatewayeinheit (10) gegeben werden.

15. Verfahren nach einem der Ansprüche 10 bis 14, **dadurch gekennzeichnet, dass** unter Einsatz des mobilen Endgeräts mindestens ein Sensor (22) und/oder mindestens eine Einheit (24) der Vorrichtung (20) mit der multifunktionalen Gatewayeinheit (10) gekoppelt wird.

16. Verfahren nach einem der Ansprüche 10 bis 15, **dadurch gekennzeichnet, dass** die multifunktionale Gatewayeinheit (10) den Status mindestens eines Sensors (22) und/oder mindestens einer Einheit (24) der Vorrichtung (20) anzeigt.

## Claims

1. Multifunctional gateway unit (10) for connecting at least one apparatus (20), used to machine, handle or store workpieces consisting at least in portions of wood, wood-based materials or plastics material, to a data server (30), comprising:
at least one data interface (12) for connecting the gateway unit (10) to the data server (30),
at least one arithmetic unit (14) which has a CPU and is designed to exchange data with the data interface (12),
at least one sensor interface (16) which is designed to receive data from a sensor (22) assigned to an apparatus (20) and to forward said data to the arithmetic unit (14), and
at least one output interface (18) which is designed to receive data from the arithmetic unit (14) and to forward said data to at least one unit (24) of the apparatus (20),
**characterised by**
a plug-and-play unit (15) which is designed to identify a sensor (22) connected to a sensor interface (16) and/or a unit (24) of the apparatus (20) connected to the output interface (18) and to configure the computing unit for communication, and
wherein the plug-and-play unit (15) is designed to access configuration data stored in the gateway unit (10) and/or to access external configuration data via the data interface (12).

2. Multifunctional gateway unit according to claim 1, **characterised in that** the arithmetic unit (14) has a single-board computer or a multi-board computer.

3. Multifunctional gateway unit according to claim 1 or 2, **characterised in that** at least one interface (12, 16, 18), in particular at least one data interface (12), operates wirelessly and, in particular, is designed as a WLAN or mobile communications interface.

4. Multifunctional gateway unit according to any of the preceding claims, **characterised in that** it further has an identification device (19) such as, in particular, an NFC interface or optical identification means.

5. Multifunctional gateway unit according to any of the preceding claims, **characterised in that** it further has a display device (11) which is preferably selected from luminous elements, screen, projector, loudspeaker and vibration device.

6. Multifunctional gateway unit according to any of the preceding claims, **characterised in that** it further has a housing (13) in or on which the components of the gateway unit (10) are arranged, wherein the housing (13) preferably forms a module that can be moved and placed individually.

7. Production system (100), comprising:
an apparatus (20) that is used to machine, handle or store workpieces consisting at least in portions of wood, wood-based materials or plastics material, or to handle or store assembly materials, operating supplies or tools, and
a multifunctional gateway unit (10) according to any of the preceding claims for connecting the device to a data server.

8. Production system according to claim 7, further comprising:
a mobile terminal (40) which is designed to communicate with the multifunctional gateway unit (10), in particular via the data server (30), and preferably has an identification device (42) such as, in particular, an NFC interface or an optical identification device.

9. Production system according to any of claims 7 and 8, **characterised in that** the apparatus (20) has a unit (24) which is coupled to the multifunctional gateway unit (10) and which is preferably selected from luminous displays such as, in particular, LED light strips, screen, projector, loudspeaker, vibration device, printer, machine controller, controller box and actuator.

10. Method for operating a production system (100) according to any of claims 7 to 9, having the steps of:
coupling the multifunctional gateway unit (10) to the apparatus (20) via the sensor interface (16) and the output interface (18),
coupling the multifunctional gateway unit (10) to the data server (30) via the data interface (12), in particular via the internet.

11. Method according to claim 10, **characterised in that**, prior to the coupling of the multifunctional gateway unit (10) to the apparatus (20), the following steps are carried out:
the multifunctional gateway unit (10) identifies a sensor (22) to be coupled and/or a unit (24) of the apparatus to be coupled,
the multifunctional gateway unit checks whether an object that is designed to communicate with the sensor (22) to be coupled and/or with the unit (24) of the apparatus (20) to be coupled is present in the multifunctional gateway unit,
if an object is present, a coupling is established between the sensor (22) to be coupled or the unit (24) of the apparatus (20) to be coupled and the multifunctional gateway unit (10) using the object, and/or
if no object is present, a suitable object is obtained via the data interface (12) and subsequently a coupling is established between the sensor (22) to be coupled or the unit (24) of the apparatus (20) to be coupled and the multifunctional gateway unit (10) using the obtained object.

12. Method according to claim 10 or 11, **characterised in that** at least one mobile terminal (40) is coupled to the multifunctional gateway unit (10), preferably via the data server (30).

13. Method according to claim 12, **characterised in that**, prior to the coupling of the at least one mobile terminal (40) to the multifunctional gateway unit (10), an identification process is carried out, in which the mobile terminal (40) identifies at least one parameter of the multifunctional gateway unit (10) and/or of a sensor (22) and/or of a unit (24) of the apparatus (20).

14. Method according to any of claims 10 to 13, **characterised in that** apparatus-related data are sent from the multifunctional gateway unit (10) to the data server (30) and/or mobile terminal (40), and/or **in that** apparatus-related data or instructions are sent from the data server (30) and/or mobile terminal (40) to the multifunctional gateway unit (10).

15. Method according to any of claims 10 to 14, **characterised in that** at least one sensor (22) and/or at least one unit (24) of the apparatus (20) is coupled to the multifunctional gateway unit (10) using the mobile terminal.

16. Method according to any of claims 10 to 15, **characterised in that** the multifunctional gateway unit (10) displays the status of at least one sensor (22) and/or at least one unit (24) of the apparatus (20).

## Revendications

1. Unité (10) formant passerelle multifonctionnelle destinée à relier à un serveur de données (30) au moins un dispositif (20), qui sert à traiter, manipuler ou stocker des pièces à traiter qui sont constituées au moins partiellement de bois, de matériaux dérivés du bois ou de matière plastique, comprenant :
au moins une interface de données (12) destinée à relier l'unité (10) formant passerelle au serveur de données (30),
au moins une unité de calcul (14), qui présente une CPU et qui est conçue pour échanger des données avec l'interface de données (12),
au moins une interface de capteur (16) qui est conçue pour recevoir des données d'un capteur (22) associé à un dispositif (20), et pour les transmettre à l'unité de calcul (14), et
au moins une interface de sortie (18) qui est conçue pour recevoir des données de l'unité de calcul (14) et pour les transmettre à au moins une unité (24) du dispositif (20),
**caractérisée par**
une unité plug-and-play (15), qui est conçue pour identifier un capteur (22) raccordé à une interface de capteur (16) et/ou une unité (24) du dispositif (20) raccordée à l'interface de sortie (18), et
pour configurer l'unité de calcul pour la communication, et
dans laquelle l'unité plug-and-play (15) est conçue pour accéder à des données de configuration stockées dans l'unité (10) formant passerelle et/ou pour accéder à des données de configuration externes par l'intermédiaire de l'interface de données (12).

2. Unité formant passerelle multifonctionnelle selon la revendication 1, **caractérisée en ce que** l'unité de calcul (14) présente un ordinateur monocarte ou multicartes.

3. Unité formant passerelle multifonctionnelle selon la revendication 1 ou la revendication 2, **caractérisée en ce qu'**au moins une interface (12, 16, 18), en particulier au moins une interface de données (12), fonctionne sans fil et est en particulier conçue comme interface WLAN ou de radiotéléphonie mobile.

4. Unité formant passerelle multifonctionnelle selon l'une quelconque des revendications précédentes, **caractérisée en ce qu'**elle présente en outre un système d'identification (19) comme en particulier une interface NFC ou des moyens d'identification optiques.

5. Unité formant passerelle multifonctionnelle selon l'une quelconque des revendications précédentes, **caractérisée en ce qu'**elle présente en outre un système d'affichage (11), qui est choisi de manière préférée parmi des éléments lumineux, un écran, un projecteur, un haut-parleur et un système vibrant.

6. Unité formant passerelle multifonctionnelle selon l'une quelconque des revendications précédentes, **caractérisée en ce qu'**elle présente en outre un boîtier (13) dans ou sur lequel sont disposés les composants de l'unité (10) formant passerelle, dans laquelle le boîtier (13) forme de manière préférée un module pouvant être déplacé et arrêté individuellement.

7. Système de production (100), comprenant :
un dispositif (20), qui sert à traiter, manipuler ou stocker des pièces à traiter qui sont constituées au moins partiellement de bois, de matériaux en bois ou de matière plastique, ou qui sert à manipuler ou à stocker du matériel de montage, des moyens de fonctionnement ou des outils, et
une unité (10) formant passerelle multifonctionnelle selon l'une des revendications précédentes destinée à relier le dispositif à un serveur de données.

8. Système de production selon la revendication 7, comprenant en outre :
un terminal mobile (40) qui est conçu pour communiquer avec l'unité (10) formant passerelle multifonctionnelle en particulier par l'intermédiaire du serveur de données (30) et qui présente de manière préférée un système d'identification (42) comme en particulier une interface NFC ou un système d'identification optique.

9. Système de production selon l'une quelconque des revendications 7 et 8, **caractérisé en ce que** le dispositif (20) présente une unité (24) couplée à l'unité (10) formant passerelle multifonctionnelle, qui est choisie de manière préférée parmi des affichages lumineux comme en particulier des bandes lumineuses à DEL, un écran, un projecteur, un haut-parleur, un système de vibration, une imprimante, une commande de machine, un boîtier de commande et un actionneur.

10. Procédé destiné à faire fonctionner un système de production (100) selon l'une des revendications 7 à 9, comprenant les étapes suivantes :
relier l'unité (10) formant passerelle multifonctionnelle au dispositif (20) par l'intermédiaire de l'interface de capteur (16) et de l'interface de sortie (18),
relier l'unité (10) formant passerelle multifonctionnelle au serveur de données (30) par l'intermédiaire de l'interface de données (12), en particulier par Internet.

11. Procédé selon la revendication 10, **caractérisé en ce que** sont effectuées, avant le couplage de l'unité (10) formant passerelle multifonctionnelle au dispositif (20), des étapes suivantes :
l'unité (10) formant passerelle multifonctionnelle identifie un capteur (22) à coupler et/ou une unité (24) à coupler du dispositif,
l'unité formant passerelle multifonctionnelle vérifie la présence dans l'unité formant passerelle multifonctionnelle d'un objet qui est conçu pour communiquer avec le capteur (22) à coupler et/ou l'unité (24) à coupler du dispositif (20),
si un objet est présent, un couplage est établi entre le capteur (22) à coupler ou l'unité (24) à coupler du dispositif (20) et de l'unité (10) formant passerelle multifonctionnelle en utilisant l'objet, et/ou
en l'absence d'objet, un objet approprié est reçu par l'intermédiaire de l'interface de données (12) et un couplage est ensuite établi entre le capteur (22) à coupler ou l'unité (24) à coupler du dispositif (20) et l'unité (10) formant passerelle multifonctionnelle en utilisant l'objet reçu.

12. Procédé selon la revendication 10 ou la revendication 11, **caractérisé en ce qu'**au moins un terminal mobile (40) est couplé à l'unité (10) formant passerelle multifonctionnelle, et ce de manière préférée par l'intermédiaire du serveur de données (30).

13. Procédé selon la revendication 12, **caractérisé en ce qu'**avant le couplage de l'au moins un terminal mobile (40) avec l'unité (10) formant passerelle multifonctionnelle, un processus d'identification est effectué au cours duquel le terminal mobile (40) identifie au moins un paramètre de l'unité (10) formant passerelle multifonctionnelle et/ou d'un capteur (22) et/ou d'une unité (24) du dispositif (20).

14. Procédé selon l'une quelconque des revendications 10 à 13, **caractérisé en ce que** des données relatives au dispositif sont transmises par l'unité (10) formant passerelle multifonctionnelle au serveur de données (30) et/ou au terminal mobile (40), et/ou **en ce que** des données ou instructions relatives au dispositif sont transmises par le serveur de données (30) et/ou le terminal mobile (40) à l'unité (10) formant passerelle multifonctionnelle.

15. Procédé selon l'une quelconque des revendications 10 à 14, **caractérisé en ce qu'**en utilisant le terminal mobile, au moins un capteur (22) et/ou au moins une unité (24) du dispositif (20) sont couplés à l'unité (10) formant passerelle multifonctionnelle.

16. Procédé selon l'une quelconque des revendications 10 à 15, **caractérisé en ce que** l'unité (10) formant passerelle multifonctionnelle affiche l'état d'au moins un capteur (22) et/ou d'au moins une unité (24) du dispositif (20).
